# EUROPÄISCHE PATENTANMELDUNG

(11) **EP 1 255 182 A2**
(43) Veröffentlichungstag der Anmeldung: **06.11.2002**
(21) Anmeldenummer: 02100438.7
(22) Anmeldetag: 02.05.2002
(51) Int. Cl.: G06F 1/24

(54) **Rücksetz-Anordnung für einen Mikrokontroller**

(30) Priorität: 05.05.2001 DE 10121935
(71) Anmelder: Philips Corporate Intellectual Property GmbH, 20099 Hamburg (DE); Koninklijke Philips Electronics N.V., 5621 BA Eindhoven (NL)
(72) Erfinder: Muth, Matthias, c/o Philips Corp. Int. Prop. GmbH, 52066 Aachen (DE)
(74) Vertreter: Volmer, Georg, Dipl.-Ing.

(57) **Zusammenfassung**

Eine Rücksetz-Anordnung (1) für einen Mikrokontroller (3) und/oder weitere zurückzusetzende Hardware-Schaltungen soll an die Erfordernisse des Mikrokontrollers und/oder der Hardware-Schaltungen optimal anpassbar sein. Dazu ist die Rücksetz-Schaltung so ausgelegt, dass sie über eine Rücksetzleitung an den Mikrokontroller ein Rücksetzsignal zu geben imstande ist, dass sie bei einem System-Kaltstart der Rücksetz-Anordnung und des Mikrokontrollers (3) ein erstes Rücksetzsignal abgibt, dessen Dauer so gewählt ist, dass jede vorhergesehene Art von Mikrokontroller (3) sich erstartet, dass die Rücksetz-Anordnung nach einem erfolgten System-Kaltstart von dem Mikrokontroller (3) mit einem zweiten Rücksetzsignal programmiert wird, dessen Dauer auf die Anforderungen des Mikrokontrollers (3) abgestimmt ist und dass die Rücksetz-Anordnung bei nachfolgenden Kalt- oder Warmstarts als Rücksetzsignal das zweite, programmierte Rücksetzsignal abgibt.

## Beschreibung

Die Erfindung betrifft eine Rücksetz-Anordnung für einen Mikrokontroller und/oder eine oder mehrere Hardware-Schaltungen. Die Aufgabe einer derartigen Rücksetz-Anordnung besteht darin, den Mikrokontroller und/oder die Hardware-Schaltungen nach einem System-Kaltstart und/oder nach einem Kalt- oder Warmstart zurückzusetzen, d.h. einen sogenannten Reset durchzuführen.

Ein System-Kaltstart liegt vor, wenn die Rücksetzanordnung und der Mikrokontroller stromlos waren und erstmalig mit Spannung versorgt werden.

Ein Kaltstart des Mikrokontrollers liegt dann vor, wenn an den früher schon einmal mit Strom versorgten und mittels eines System-Kaltstarts zurückgesetzten Mikrokontroller, nachdem dieser aktuell zunächst ohne Versorgungsspannung war, eine Versorgungsspannung angelegt wird Bei einem derartigen Kaltstart ist wegen der dabei auftretenden, undefinierten Zustände ein Rücksetzen des Mikrokontrollers erforderlich.

Ein Warmstart liegt dann vor, wenn dem Mikrokontroller bereits eine Versorgungsspannung zugeführt wird und der Mikrokontroller zurückzusetzen ist.

Stand der Technik ist es unter anderem, bei Mikrokontrollern einen verlängerten Reset, der nach einem Kaltstart erforderlich ist, dadurch zu erzielen, dass an dem Mikrokontroller eine externe Kapazität am Reset-Eingang vorgssehen ist. Dadurch entsteht jedoch der Nachteil, dass der Reset nachfolgend immer die durch die Kapazität bestimmte Länge aufweist, auch wenn dies, wie beispielsweise bei einem Warmstart, nicht erforderlich ist.

Bei ferner bekannten Mikrokontrollern, die den Reset selbst verlängern, ergibt sich die Gefahr, dass bei Nichteinschwingen des zu dem Mikrokontrollern gehörenden Oszillators, der Mikrokontroller im Zustand "Reset aktiv" festklemmt. Damit entsteht eine erhöhte Stromaufnähme, und der Mikrokontroller ist nicht betriebsfähig. Aus dem US-Patent 5,463,336 ist ferner eine Schaltung bekannt, die zwei unterschiedliche Rücksetzlängen kennt, wobei nach einem Einschalten der Versorgungsspannung ein längerer Reset und bei Warmstarts ein kürzerer Reset ausgelöst wird Auch hierbei sind jedoch feste Reset-Zeiten eingeprägt, die durch die Auslegung der Schaltung bestimmt sind und nachfolgend nicht verändert werden können. Weiterhin gibt es bei diesem System keine Kontrolle über den Erfolg eines Resets.

Es ist Aufgabe der Erfindung, eine Rücksetzanordnung anzugeben, die, angepasst an den Mikrokontroller und ggf. weitere Schaltungen, möglichst kurze Resets gestattet.

### Diese Aufgabe ist erfindungsgemäß durch die Merkmale des Patentanspruchs 1 gelöst:

Rücksetz-Anordnung für einen Mikrokontroller und/oder eine oder mehrere Hardware-Schaltungen,
wobei die Rücksetz-Anordnung
- über eine Rücksetzleitung an den Mikrokontroller ein Rücksetzsignal zu gaben imstande ist,
- bei einem System Kaltstart der Rücksetz-Anordnung und des Mikrokontrollers ein erstes Rücksetzsignal abgibt, dessen Dauer so gewählt ist, dass jede vorgesehene Art von Mikrokontroller sicher startet,
- nach einem erfolgten System-Kaltstart von dem Mikrokontroller mit einem zweiten Rücksetzsignal programmiert wird, dessen Dauer auf die Anforderungen des Mikrokontrollers abgestimmt ist, und
- bei nachfolgenden Kalt- oder Warmstarts als Rücksetzsignal das zweite, programmierte Rücksetzsignal abgibt.

Die Rücksetzanordnung gibt nach einem System-Kaltstart, also dann, wenn die Versorgungsspannung erstmalig vor versorgungsspannungslosem Zustand eingeschaltet wurde, ein erstes Rücksetzsignal ab. Die Dauer dieses Rücksetzsignals ist so gewählt, dass ein Mikrokontroller und/oder andere vorgesehene Hardware-Schaltungen sicher zurückgesetzt werden. Die Dauer dieses ersten Rücksetzsignals kann dabei beispielsweise auf verschiedene mögliche Arten von Mikrokontrollern und auf verschiedene Arten von Hardware-Schaltungen ausgelegt sein, mit denen die Rücksetz-Anordnung kombiniert werden kann. Die Dauer dieses ersten Rücksetzsignals kann also relativ lang gewählt werden, um alle möglichen Erfordernisse abdecken zu können.

Ist der System Kaltstart erfolgreich, wird die Rücksetz-Anordnung mittels des Mikrokontrollers mit einem zweiten Rücksetzsignal programmiert, d.h., es wird der Rücksetz-Anordnung ein zweites Rücksetzsignal mitgeteilt, dessen Dauer auf die Anforderungen des Mikrokontrollers und/oder der ebenfalls rückzusetzenden Hardware-Schaltungen abgestimmt ist. Dieses zweite Rücksetzsignal kann somit individuell auf den Mikrokontroller und die tatsächlich vorhandenen Schaltungen ausgelegt sein und somit kürzer, ggf. sogar deutlich kürzer als das erste Rücksetzsignal sein.

Erfolgen nun nach diesem erfolgreich durchgeführten System-Kaltstart und der Programmierung der Rücksetz-Anordnung mit dem zweiten Rücksetzsignal Kalt- oder Warmstarts, so benutzt die Rücksetz-Anordnung für diese Warmstarts und die dabei erforderlichen Rücksetzvorgänge das zweite, programmierte Rücksetzsignal mit der ggf. kürzeren Dauer.

Damit tritt zum einen der Vorteil ein, dass bei Kalt- oder Warmstarts ein kürzerer Rücksetzvorgang als bei System-Kaltstarts möglich ist. Die Dauer dieses Rücksetzvorgangs ist nur noch so lang, wie für den tatsächlich vorgesehenen Mikrokontroller und die ggf. rückzusetzenden Hardware-Schaltungen erforderlich. Ferner kann dadurch, dass die Länge des bei Kalt- oder Warmstarts erfolgenden Rücksetzvorgangs programmierbar ist, d.h. wählbar ist, die Rücksetz-Anordnung in gleicher Bauart für verschiedene Arten von Mikrokontrollern und ggf. verschiedene, ebenfalls rückzusetzende Hardware-Schaltungen angewendet werden, ohne dass die Rücksetz-Anordnung selbst hierfür anzupassen wäre. Die Anpassung an diese Schaltungen findet vielmehr durch die angepasste Länge des zweiten programmierten Rücksetzsignals statt

Bei einer Ausgestaltung der Erfindung gemäß Anspruch 2 ist die Rücksetz-Anordnung auf einen Systemchip vorgesehen. Im Zuge immer höherer Systemintegration wird dazu übergegangen, analoge Schaltungskomponenten und der Spannungsversorgung dienende Komponenten, die rund um einen Mikrokontroller benötigt werden, in einem solchen Systemchip zu integrieren. Dies ermöglicht, den Mikrokontroller mittels eines solchen Systemchips völlig unabhängig zu überwachen. Für die erfindungsgemäße Rücksetz-Anordnung ist die Integration derselben in einen solchen Systemchip vorteilhart, da von dem Systemchip aus ohnehin beispielsweise das Schalten der Versorgungsspannung erfolgt und die diesbezüglichen Informationen daher ohnehin vorliegen.

Gemäß einer weiteren Ausgestaltung der Erfindung nach Anspruch 3 ist vorgesehen, dass das zweite programmierte Rücksetzsignal eine kürzere Dauer als das erste Rücksetzsignal aufweist. Wie oben bereits erwähnt, ist dies im allgemeinen der Fall und insbesondere vorteilhaft, weil auf diese Weise der Kalt- oder Warmstart kürzer gswahlt werden kann als der Kaltstart. Gleichwohl findet wegen der angepassten Dauer des zweiten programmierten Rücksetzsignals ein für den Mikrokontroller und/oder die Hardware optimierter Vorgang statt.

Gemäß weiteren Ausgestaltungen der Erfindung nach den Ansprüchen 4 und 5 können vorteilhaft Sicherungsmechanismen vorgesehen sein, welche dann, wenn ein Reset mit der Länge des zweiten Rücksetzsignals fehlschlägt, ein Reset mit der ersten Länge des Rücksetzsignals vornehmen. Somit kann unter besonderen Umständen, bei denen ein Rücksetzen mit der zweiten Dauer des Rücksetzsignals fehlschlägt, sicherheitshalber ein weiterer Reset mit der meist längären Dauer des ersten Rücksignals vorgenommen werden. Schlägt auch dieses fehl, wird der Mikrokontroller durch Abschalten der Versorgungsspannung stromlos geschaltet und auf diese Weise in einen Low-Power-Fehlermodus versetzt. Dies ist sinnvoll, da in einem derartigen Falle anzunehmen ist, dass ein Fehler seitens des Mikrokontrollers vorliegt. Dadurch, dass dieser jetzt stromlos ist, wird unnötiger Stromverbrauch vermieden.

Nach einem Rücksetzvorgang muss der Mikrokontroller normalerweise die Rücksetzleitungen nach einer vorgegebenen Zeit wieder freigeben, d.h. dasjenige Potential, das auf der Rücksetzleitung zum Rücksetzen vorgesehen ist, muss nach dieser vorgegebenen Zeitspanne wieder durch den "Freizustand" der Rücksetzleitung ersetzt werden. Ist dies nicht der Fall, hat entweder der Mikrokontroller den Rücksetzvorgang nicht vorschriftsmäßig beendet oder die Rücksetzleitung selbst ist gegen ein anderes Potential geklemmt. In beiden Fällen liegt ein Fehlerzustand vor, der von der Rücksetz-Anordnung gemäß Anspruch 6 vorteilhaft überwacht werden kann und den die Rücksetz-Anordnung dadurch beendet, indem sie den Mikrokontroller stromlos schaltet und damit den Stromverbrauch minimiert.

Die Rücksetz-Anordnung kann gemäß einer weiteren Ausgestaltung der Erfindung nach Anspruch 7 vorteilhaft so ausgelegt sein, dass sie auch ohne irgendeinen Fehlerzustand in dem Betriebszustand jederzeit in der Lage ist, den Mikrokontroller in einen Low-Power-Modus zu versetzen. Dies kann dann vorteilhaft sein, wann der Mikrokontroller für eine absehbare Zeit außer Betrieb gesetzt werden kann.

Das Aufwecken des Mikrokontrollers findet gemäß einer weiteren Ausgestaltung der Erfindung nach Anspruch 8 in der Weise statt, dass die Rücksetz-Anordnung nach Auftreten einen internen oder externen Weckereignisses den Mikrokontroller aus dem Low-Power-Modus aufweckt. Ein derartiges Aufwecken kann auf diese Weise sowohl bei dem Schalten in den Low-Power-Modus gemäß Anspruch 7 stattfinden, wie auch bei den Zuständen, bei denen der Mikrokontroller nach Auftreten eines Fehlers in einen Low-Power-Fehlermodus versetzt wurde.

Nachfolgend wird ein Ausführungsbeispiel der Erfindung anhand der Zeichnung näher erläutert. Es zeigen:
- Figur 1: Ein Blockschaltbild einer erfindungsgemäßen Rücksetz-Anordnung in einem Systemchip sowie eines rückzusetzenden Mikrokontrollers und
- Figur 2: ein Ablauf-Diagramm der Rücksetz-Anordnung gemäß Figur 1.

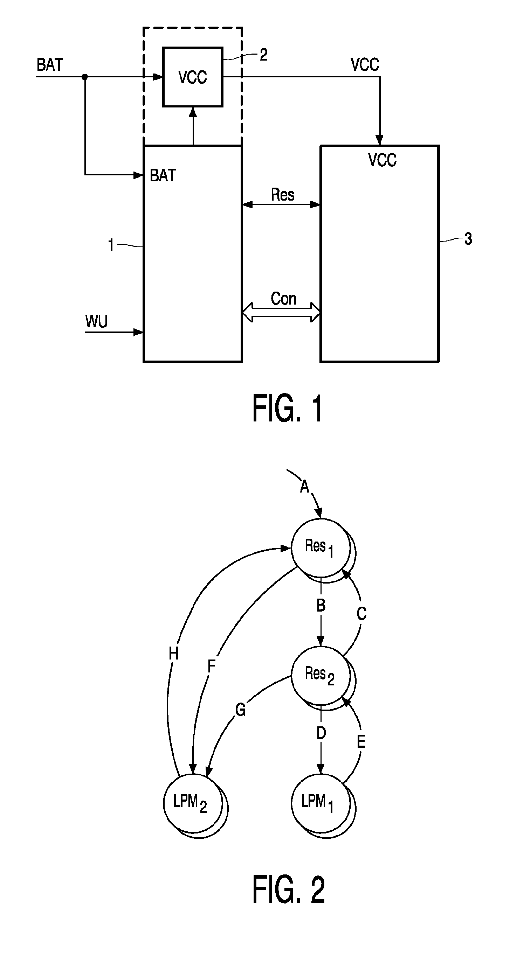

In Figur 1 ist in Form eines Blockschaltbildes ein Systemchip 1 dargestellt, der eine erfindungsgemäße, in der Figur 1 nicht näher dargestellte, Rücksetz-Anordnung aufweist. Ein Teil des Systemchips 1 ist mit gestrichelter Umrandung dargestellt. Dieser Teil enthält eine Versorgungsspannungs-Schaltung 2, welche einem ebenfalls in der Figur schematisch angedeuteten Mikrokontroller 3 eine Versorgungsspannung VCC zuführt, bzw. welche in der Lage ist, diese Versorgungsspannung zu schalten.

Der Teil des Systemchips 1, der die Versorgungsspannungs-Schaltung 2 enthält, ist deshalb gestrichelt dargestellt, weil die Versorgungsspannungs-Schaltung 2 auch außerhalb des Systemchips 1 vorgesehen sein kann.

Die Versorgungsspannung des gesamten in Figur 1 dargestellten Systems kann beispielsweise durch eine Batterie erfolgen, die dem Systemchip 1 und der Versorgungsspannungs-Schaltung 2 eine Versorgungsspannung BAT zuführt.

Die Versorgungsspannungs-Schaltung 2 kann diese Spannung beispielsweise regeln, insbesondere aber auch ein- und ausschalten. Die bereits erwähnte Versorgungsspannung VCC wird unter anderem dem Mikrokontroller 3 zugeführt, kann aber auch weiteren Hardware-Komponenten, die in der Figur 1 nicht dargestellt sind, zugeführt werden.

Die Versorgungsspannungs-Schaltung 2 wird mittels des Systemchips 1 bzw. der in dieser vorgesehenen erfindungsgemäßen Rücksetz-Anordnung gesteuert.

Zwischen der in dem Systemchip 1 vorgesehenen erfindungsgemäßen Rücksetz-Anordnung und dem Mikrokontroller 3 bestehen im wesentlichen zwei Verbindungen. Einerseits ist eine Rücksetzleitung Res vorgesehen, mittels welcher einerseits die Rücksetz-Anordnung in der Lage ist, den Mikrokontroller 3 freizugeben. Nach einem Reset wird der Zustand der Rücksetzleitung Res von der in dem Systemchip 1 vorgesehenen Rücksetz-Anordnung überwacht.

Ferner ist eine ggf. mehrere Bit breite Steuerungsverbindung vorgesehen, die in der Figur mit Con gekennzeichnet ist und welche eine gegenseitige Steuerung zwischen Systemchip 1 bzw. der in dieser vorgesehenen Rücksetz-Anordnung einerseits und dem Mikrokontroller 3 andererseits gestattet.

Die Rücksetz-Anordnung, die in dem Systemchip 1 vorgesehen ist, hat die Aufgabe, den Mikrokontroller 3 zurückzusetzen. Dies kann grundsätzlich unter zwei Umständen erforderlich sein. Einerseits kann ein System-Kaltstart vorliegen. Bei einem System-Kaltstart wurde dem Mikrokontroller 3 zunächst keine Versorgungsspannung VCC zugeführt, dh.. der Mikrokontroller 3 war spannungslos und inaktiv. Nach erstmaligem Anlegsn der Versorgungsspannung VCC mittels der Versorgungsspannungs-Schaltung 2 kann sich der Mikrokontroller 3 in einem undefinierten Zustand befinden. Daher ist nach Anlegen der Versorgungsspannung ein Rücksetzvorgang erforderlich. Erfindungsgemäß liefert die in dem Systemchip 1 vorgesehene Rücksetz-Anordnung in diesem Falle ein Rücksetzsignal auf der Rücksetzleitung Res, welches eine erste Länge aufweist, die so bemessen ist, dass unabhängig von der Art des Mikrokontrollers 3 auf jeden Fall ein sicherer Rücksetzvorgang stattfindet, da dem Systemchip 1 zu diesem Zeitpunkt noch nicht bekannt ist, welche Art von Mikrokontroller 3 oder andere Hardware angeschlossen ist.. Die Dauer dieses ersten Rücksetzsignals ist also relativ lang bemessen, um unter allen vorgesehenen Umständen ein sicheres Rücksetzen des Mikrokontrollers 3 zu gewährleisten.

Nach einem solchen System-Kaltstart können Kaltstarts stattfinden, bei denen ein Wiedereinschalten der Spannungsversorgung VCC erfolgt, nachdem diese vorher abgeschaltet war, beispielsweise um Strom zu sparen. Ferner können jedoch auch in der Betriebsphase, in der der Mikrokontroller 3 bereits die Versorgungsspannung VCC erhält, Rücksetzvorgänge erforderlich oder wünschenswert sein. Es handelt sich dann um sogenannte Warmstarts.

Für derartige Kalt- oder Warmstarts setzt die Rücksetz-Anordnung ein zweites, programmiertes Rücksetzsignal kürzerer Dauer ein, das ebenfalls über die Rücksetzleitung Res an den Mikrokontroller 3 gegeben wird und dessen Länge individuell auf die Erfordernisse des Mikrokontrollers 3 und ggf. auch weiterer, in der Figur 1 nicht dargestellter, jedoch auch zurückzusetzender Schaltungs-Elemente abgestimmt ist.

Um dieses zweite Rücksetzsignal optimal auslegen zu können, gibt der Mikrokontroller 3 über die Steuerleitungen CON nach einem erfolgreichen System-Kaltstart ein Signal ab, das von der Rücksetz-Anordnung in dem Systemchip 1 empfangen wird und das die Dauer eines zweiten, programmierten Rücksetzsignals angibt. Nach diesem Programmiervorgang wird - wie oben erläutert - jeder Kalt- oder Warmstart mit dieser optimierten Länge des zweiten, programmierten Rücksetzsignals vorgenommen.

Nach ggf. erfolglosen Reset-Vorgängen, auf die nachfolgend anhand der Erläuterung der Figur 2 noch näher einzugehen sein wird, kann ggf. der Mikrokontroller 3 mittels Abschalten der Versorgungsspannung VCC in einen Low-Power-Modus versetzt werden. Damit wird eine Energieeinsparung erzielt. Soll der Mikrokontroller 3 aus diesem Zustand wieder geweckt werden, so erhält die in dem Systemchip 1 vorgesehene erfindungsgemäße Rücksetz-Anordnung ein externes Aufwecksignal über eine Leitung WU. Erscheint dieses Signal, gibt die Rücksetz-Anordnung ihrerseits ein entsprechendes Signal an die Versorgungsspannungs-Schaltung 2, welche daraufhin die Versorgungsspannung VCC wieder einschaltet. Ferner führt die Rücksetz-Anordnung ein System-Kaltstart-Rücksetzen durch, also ein Rücksetzen mittels des ersten Rücksetzsignals, da zuvor offenbar erfolglose Rücksetzvorgänge vorlagen.

Anhand des Ablaufdiagramms gemäß Figur 2 wird nachfolgend erläutert, unter welchen Umständen welche Rücksetzvorgänge vorgenommen werden. Ferner wird anhand dieser Figur erläutert, unter welchen Umständen und wie der Mikrokontroller 3 in einen Low-Power-Modus versetzt wird.

Der Pfeil Ain Figur 2 deutet zunächst den Systemzustand an, in dem sich das gesamte System oder wenigstens der Mikrokontroller 3 zunächst in einem versorgungsspannungslosen Zustand befand, nun aber die Versorgungsspannungen BAT und VCC eingeschaltet werden. Es wird dann, wie in der Figur 2 durch den Zustand Res₁ angedeutet, ein Rücksetzen des Mikrokontrollers mittels des ersten Rücksetzsignals durchgeführt.

Ist dieser Rücksetzvorgang erfolgreich, wird, wie durch Pfeil B angedeutet, einerseits die Länge des zweiten Rücksetzsignals an die Rücksetz-Anordnung gegeben. Nachfolgende Rücksetzvorgänge, bei denen es sich um Kalt- oder Warmstarts handelt, werden dann mittels des zweiten Resets durchgeführt. Dieses ist in der Figur 2 durch den zweiten Zustand Res₂ angedeutet.
Bereits nach Durchrührung des System-Kaltstart-Rücksetzvorgangs gemäß dem Block Res₁ nach Figur 2 wird überwacht, ob der Mikrokontroller 3 gemäß Figur 1 die Rücksetzleitung nach einer vorgegsbenen Zeitspanne wieder freigibt. Ist beispielsweise hohes Potential für ein Rücksetzsignal auf der Rücksetzleitung vorgesehen, so muss die Rücksetzleitung nach dieser vorgegebenen Zeitspanne wieder auf niedriges Potential wechseln. Ist dies nicht der Fall, liegt entweder ein Fehler seitens des Mikrokontrollers 3 vor oder die Rücksetzleitung Res ist auf hohes Potential geklemmt. In beiden Fällen versetzt die Rücksetz-Anordnung in dem Systemchip 1 gemäß Figur 1 den Mikrokontroller 3 in einen Low-Power-Fehlermodus mit abgeschalteter VCC, der in der Figur mit dem Block LPM₂ gekennzeichnet ist. Die Überwachung dieser beiden Zustände und der Übergang in diesen Modus ist in der Figur 2 mittels des Pfeils F gekennzeichnet.

Wie oben bereits erläutert, werden nach einem System Kaltstart weitere Kalt- oder Warmstarts mit einem Rücksetzsignal der zweiten, programmierten Länge durchgeführt, was in der Figur 2 durch den Block Res₂ gekennzeichnet ist. Nach einem solchen Kaltoder Warmstart wird ggf. überwacht, ob der Mikrokontroller reagiert. Dies kann beispielsweise durch einen sogenannten Watchdog geschehen, bei dem es sich um eine Art Timer-Schaltung handelt, die in regelmäßigen Abständen bestimmte Zustände des Mikrokontrollers überwacht. Findet keine Reaktion des Mikrokontrollers nach einer vorgegebenen Zeitspanne nach einem Kalt- oder Warmstart statt, so ist davon auszugehen, dass der Warmstart nicht erfolgreich war. In diesem Fall wird entsprechend Pfeil C in Figur 2 ein erneuter Start mit der Dauer des ersten Rücksetzsignals durchgeführt. Ist dieser dann erfolgreich, wird weiter entsprechend Pfeil B verfahren, anderenfalls liegt ein Fehlerzustand vor, und es liegt eine der Fehlerbedingungen gemäß Pfeil F vor, so dass das System in den Low-Power-Modus LPM₂ mit abgeschalteter VCC versetzt wird

Aus dem Low-Power-Fehlermodus LPM₂ kann das System mittels der erfindungsgemäßen Rücksetz-Anordnung gsweckt werden. In diesem Fall wird über die Weckleitung WU der Schaltung gemäß Figur 1 ein Wecksignal an die Rücksetz-Anordnung gegeben, die ihrerseits ein Einschalten der Versorgungsspannung mittels der Versorgungsspannungs-Schaltung 2 auslöst und andererseits ein System-Kaltstart-Reset mit der Dauer des ersten Rücksetzsignals auslöst.
Gegebenenfalls kann es auch wünschenswert sein, auch bei einwandfreier Funktionsweise des Mikrokontrollers 3 gemäß Figur 1, also ohne dass eine Fehlerbedingung vorliegt, den Mikrokontroller 3 in einen Low-Power-Modus zu versetzen. Dies kann beispielsweise aus Energiespargründen vorteilhaft sein. Auch hierzu wird die erfindungsgemäße Rücksetz-Anordnung eingesetzt; auf entsprechende Anforderung beispielsweise mittels einer Steuer-Software, kann der Mikrokontroller 3 ein entsprechendes Signal über die Steuerungsverbindung CON an die in dem Systemchip 1 vorgesehene Rücksetz-Anordnung geben, woraufhin diese die Versorgungsspannungs-Schaltung 2 so schaltet, dass die Versorgungsspannung VCC des Mikrokontrollers 3 abgeschaltet wird Dies ist in der Figur 2 durch den Pfeil D und den Block LPM₁ dargsstellt, bei dem es sich um den Low-Power-Modus handelt. Ein Aufwecken aus diesem Low-Power-Modus findet ebenfalls durch ein Signal auf der Leitung WU der Schaltung gemäß Figur 1 statt, wodurch die Versorgungsspannung VCC wieder eingeschaltet wird, verbunden mit einem Rücksetzsignal der Dauer des zweiten, programmierten Dauer des Rücksetzsignals. Dies ist in Figur 2 durch den Pfeil E angedeutet.

Die erfindungsgemäße Anordnung kann also einerseits durch die variable Länge des zweiten, programmierten Rücksetzsignals individuell an die tatsächlich vorliegenden Bedingungen angepasst werden. Sie gestattet darüber hinaus eine Überwachung des Rücksetzvorgangs und kann je nach Fehlerbedingung den Mikrokontroller entweder mit dem programmierten Rücksetzsignal der zweiten Dauer zurücksetzen oder erneut rücksetzen, diesmal jedoch mit einem Rücksetzsignal der ersten Dauer. Darüber hinaus besteht die Möglichkeit, dann, wenn auch nach einem weiteren Rücksetzvorgang mit der ersten Länge des Rücksetzsignals sich die Fehlerbedingung nicht auflöst, den Mikrokontroller in Low-Power-Modus zu versetzen.

Damit gestattet die erfindungsgemäße Rücksetz-Anordnung neben der individuellen Anpassung an den Mikrokontroller 3 auch eine optimale Überwachung dieses Mikrokontrollers und bei Vorliegen eines nicht behebbaren Fehlers eine Einsparung von Energie, die durch ein Versetzen des Mikrokontrollers 3 in einen Low-Power-Modus LPM₂ erzielt wird.

## Patentansprüche

1. Rücksetz-Anordnung für einen Mikrokontroller (3) und/oder eine oder mehrere Hardware-Schaltungen,
wobei die Rücksetz-Anordnung
- über eine Rücksetzleitung (Res) an den Mikrokontroller (3) ein Rücksetzsignal zu geben imstande ist,
- bei einem System-Kaltstart der Rücksetz-Anordnung und des Mikrokontrollers (3) ein erstes Rücksetzsignal (Res₁) abgibt, dessen Dauer so gewählt ist, dass jede vorgesehene Art von Mikrokontroller (3) sicher startet,
- nach einem erfolgten System-Kaltstart von dem Mikrokontroller (3) mit einem zweiten Rücksetzsignal (Res₂) programmiert wird, dessen Dauer auf die Anforderungen des Mikrokontrollers (3) abgestimmt ist, und
- bei nachfolgenden Kalt- oder Warmstarts als Rücksetzsignal das zweite, programmierte Rücksetzsignal (Res₂) abgibt.

2. Rücksetz-Anordnung nach Anspruch 1,
**dadurch gekennzeichnet,**
**dass** die Rücksetz-Anordnung auf einem System-Chip (1) vorgesehen ist, welcher außerdem analoge und der Spannungsversorgung dienende Komponenten (2) aufweist.

3. Rücksetz-Anordnung nach Anspruch 1,
**dadurch gekennzeichnet,**
**dass** das zweite, programmierte Rücksetzsignal (Res₂) eine kürzere Dauer als das erste Rücksetzsignal (Res₁) aufweist.

4. Rücksetz-Anordnung nach Anspruch 1,
**dadurch gekennzeichnet,**
**dass** die Rücksetz-Anordnung in dem Falle, dass bei einem Kalt- oder Warmstart eine Rückstellung des Mikrokontrollers (3) mittels des zweiten Rücksetzsignals (Res₂) fehlschlägt, nachfolgend ein Rücksetzsignal entsprechend dem ersten Rücksetzsignal (Res₁) abgibt.

5. Rücksetz-Anordnung nach Anspruch 4,
**dadurch gekennzeichnet,**
**dass** die Rücksetz-Anordnung in dem Falle, dass eine Rückstellung des Mikrokontrollers mittels des ersten Rücksetzsignals (Res₁) ebenfalls fehlschlägt, den Mikrokontroller in einen Low-Power-Fehlermodus (LPM₂) versetzt.

6. Rücksetz-Anordnung nach Anspruch 1,
**dadurch gekennzeichnet,**
**dass** die Rücksetz-Anordnung nach einer Abgabe eines Rücksetzsignals die Rücksetzleitung überwacht und in dem Falle, dass der Mikrokontroller die Rücksetzleitung (Res) nach dem Rücksetzen nicht nach einer vorgegebenen Zeitspanne wieder freigibt oder dass die Rücksetzleitung (Res) gegen ein Fremdpotential geklemmt ist, den Mikrokontroller (3) in einen Low-Power-Fehlermodus (LPM₂) versetzt.

7. Rücksetz-Anordnung nach Anspruch 1,
**dadurch gekennzeichnet,**
**dass** die Rücksetz-Anordnung in der Lage ist, den Mikrokontroller (3) aus einen Low-Power-Modus (LPM₁) zu wecken.

8. Rücksetz-Anordnung nach Anspruch 5 oder 7,
**dadurch gekennzeichnet,**
**dass** die Rücksetz-Anordnung den Mikrokontroller (3) nach Auftreten eines internen oder externen Weckereignisses aus einem Low-Power-Modus (LPM₁, LPM₂) weckt.
